(19) Europäisches Patentamt
European Patent Office
Office européen des brevets

(11) Veröffentlichungsnummer: **0 308 842 B1**

(12) **EUROPÄISCHE PATENTSCHRIFT**

(45) Veröffentlichungstag der Patentschrift: **23.12.92**

(51) Int. Cl.[5]: **C09B 3/36**

(21) Anmeldenummer: **88115296.1**

(22) Anmeldetag: **17.09.88**

# (54) Verfahren zur Herstellung von Alkoxi(iso)-violanthrendionen.

(30) Priorität: **22.09.87 DE 3731809**

(43) Veröffentlichungstag der Anmeldung:
**29.03.89 Patentblatt 89/13**

(45) Bekanntmachung des Hinweises auf die Patenterteilung:
**23.12.92 Patentblatt 92/52**

(84) Benannte Vertragsstaaten:
**CH DE FR GB LI**

(73) Patentinhaber: **BASF Aktiengesellschaft**
**Carl-Bosch-Strasse 38**
**W-6700 Ludwigshafen(DE)**

(72) Erfinder: **Helwig, Reinhard, Dr.**
**Theodor-Storm-Strasse 27**
**W-6718 Gruenstadt(DE)**
Erfinder: **Hoch, Helmut, Dr.**
**Am Wingertsberg 14**
**W-6719 Weisenheim(DE)**

EP 0 308 842 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Seit langem ist bekannt, daß durch Alkylierung von Dihydroxiviolanthrendion oder -isoviolanthrendion wertvolle Küpenfarbstoffe erhalten werden. Als Stand der Technik sei für einige wichtige Vertreter dieser Klasse genannt:

a) die Methylierung von 16,17-Dihydroxiviolanthrendion-5,10 mit o/p-Toluolsulfonsäuremethylester oder Dimethylsulfat in Nitrobenzol (US-PS 2 042 414, 2 140 455 und 2 503 823; SU-PS 46 644); in Trichlorbenzol (CH-PS 100 194, US-PS 2 503 823, CZ. 146 638, BIOS 987, 69, 70); in einer Mischung aus Leuchtöl und Polychlorbenzolen (SU-PS 52 940, ref. in C. 1939, I, 1864) oder in Kohlenwasserstoffen mit einem Siedepunkt zwischen 80 und 140 °C (SU-PS 1 028 699; ref. in C.A. 100 (1984) : 35845 q); außerdem die Methylierung mit Dimethylmethanphosphonat in Nitrobenzol, Trichlorbenzol, Naphthalin oder in einem Überschuß des Alkylierungsmittels (DE-OS 2 900 630);

b) die Ethylierung von 16,17-Dihydroxiviolanthrendion-5,10 mit Diethylsulfat in Nitrobenzol oder Dichlorbenzol (DE-PS 417 068; Friedländer 15, 761);

c) die Methylierung von 6,15-Dihydroxiisoviolanthrendion-9,18 in Nitrobenzol mit Dimethylsulfat (DE-PS 417 068) oder mit p-Toluolsulfonsäuremethylester (DE-PS 468 957; Friedländer 16, 1490).

Die Verfahren des Standes der Technik sind wegen der dabei als Reaktionsmedium verwendeten Lösungsmittel aus ökologischer Sicht nachteilig.

Aufgabe der vorliegenden Erfindung war es, ein Verfahren zur Herstellung von alkoxisubstituierten (Iso)-violanthrendionen bereitzustellen, welches die ökologischen Nachteile der oben genannten Verfahren nicht aufweist.

Gegenstand der Erfindung ist ein Verfahren zur Herstellung von Bisalkoxi(iso-)violanthrendionen der Formeln

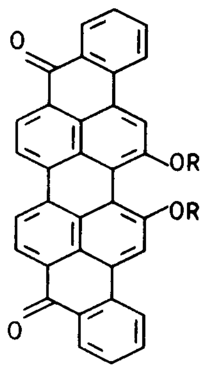
(I) und
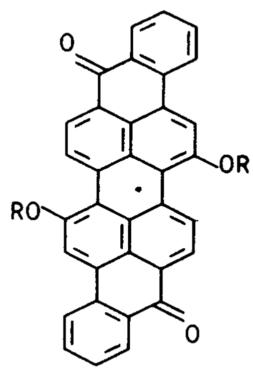
(II),

in denen R $C_1$- bis $C_4$-Alkyl bedeutet, durch Alkylierung der entsprechenden Bishydroxiverbindungen (R = H) in einer organischen Flüssigkeit als Reaktionsmedium in Gegenwart von Alkalimetallsalzen schwacher Säuren und tertiären aliphatischen und/oder tertiären aromatischen Aminen, wobei tertiäre aliphatische Amine bevorzugt sind bei 100 bis 200 °C , das dadurch gekennzeichnet ist, daß man als organische Flüssigkeit Benzoesäuremethylester verwendet.

Überraschend und auch für den Fachmann nicht vorhersehbar war, daß der erfindungsgemäß als Reaktionsmedium zu verwendende Benzoesäuremethylester die Bedingungen der Reaktion und Regeneration ohne nennenswerte Zersetzung übersteht, da bekannt war, daß Benzoesäuremethylester unter alkalischen Bedingungen zur Verseifung neigt (vgl. z. B. Farbe und Lack, 1941, 142; Chem. Zentralblatt 1913, II, 1047; Ullmann, Encyclopädie der technischen Chemie, 4. Aufl., Bd. 8, 371 (1974).

Das beim erfindungsgemäßen Verfahren verwendete Reaktionsmedium ist biologisch gut abbaubar, gut regenerierbar und aus der Abluft gut auszuwaschen. In diesem Medium erfolgt die gewünschte Umsetzung ebenso schnell und vollständig wie in den Lösungsmitteln des Standes der Technik.

Ein weiterer Vorteil des erfindungsgemäß zu verwendenden Reaktionsmediums ist dessen sehr geringe Toxizität.

Für die Umsetzung wendet man in der Regel die 5- bis 15-fache Gewichtsmenge Benzoesäuremethylester, bezogen auf die Dihydroxi(iso)-violanthrendionverbindungan, bevorzugt die 8- bis 12fache Gewichtsmenge. Man kann auch größere Mengen an Benzoesäuremethylester anwenden, was - abgesehen von der größeren zu regenerierenden Menge - für die Reaktion keine Nachteile, jedoch auch keine Vorteile bringt.

Die Alkylierung erfolgt beim Verfahren der vorliegenden Erfindung - in Abhängigkeit vom Alkylierungsmittel - bei Temperaturen von 100 bis 200 °C , bevorzugt bei 140 bis 190 °C. Zur Vervollständigung der

Alkylierung ist es auch möglich, nach der Zugabe des Alkylierungsmittels die Temperatur zu erhöhen.

Als Alkalimetallsalze schwacher Säuren kommen die Alkalimetallcarbonate und -hydrogencarbonate in Betracht.

Um hohe Ausbeuten an den gewünschten Farbstoffen zu erhalten, erfolgt die Alkylierung wie bei den Verfahren des Standes der Technik in Gegenwart geringer Mengen an tertiären aliphatischen Aminen wie Triethylamin, Tripropylamin, Tributylamin, Tripentylamin, Trihexylamin, Triethanolamin oder Gemischen davon, und/oder von tertiären aromatischen Aminen wie N,N-Dimethylanilin oder N,N-Diethylanilin. Dabei sind aliphatische tertiäre Amine bevorzugt. In der Regel liegen die Mengen an diesen Aminen insgesamt bei unterhalb von 20 Gew.%, bezogen auf die zu alkylierende Hydroxyverbindung.

Als Alkylierungsmittel kommen die aus dem Stand der Technik bekannten in Betracht, z. B. Dialkylsulfate wie Dimethylsulfat, Diethylsulfat, Dipropylsulfat, Dibutylsulfat, o- und p-Toluolsulfonsäurealkylester wie der Methylester und Ethylester, Benzolsulfonsäurealkylester wie der Methylester und -ethylester, Methanphosphonsäuredimethylester und -diethylester.

Die Aufarbeitung des Reaktionsgemisches erfolgt in üblicher Weise. So können die Verfahrensprodukte durch Filtrieren oder Absaugen isoliert werden, wobei Reste des anhaftenden Lösungsmittels entweder durch Auswaschen mit einem wasserlöslichen organischen Lösungsmittel, z. B. Methanol, und anschließend mit Wasser, oder aber durch Behandlung mit heißem Wasser und/oder Wasserdampf entfernt werden. Es ist aber auch möglich, die Verfahrensprodukte durch Abdestillieren des Lösungsmittels in der Wärme, gegebenenfalls unter vermindertem Druck, zu isolieren, wobei Verunreinigungen durch nachträgliche Reinigungsschritte, z. B. durch Behandlung mit Wasser oder Säuren entfernt werden können.

Die folgenden Ausführungsbeispiele sollen das Verfahren zusätzlich erläutern. Die angegebenen Teile und Prozente beziehen sich auf das Gewicht.

Beispiel 1 (C.I. Vat Green 1; C.I. No. 59 825)

280 Teile Benzoesäuremethylester, 30 Teile 16,17-Dihydroxiviolanthrendion-5,10, 42 Teile Pottasche, 2 Teile Tributylamin und 3 Teile Dimethylanilin werden 3 Stunden bei 120 °C und anschließend 3 Stunden bei 150 bis 160 °C unter Abscheiden des Reaktionswassers gerührt. Dann werden bei 150 °C 31,5 Teile Dimethylsulfat in 1,5 Stunden zugetropft und die Temperatur noch 3 Stunden bei 150 °C gehalten. Nach Abkühlen auf 80 bis 90 °C wird der Überschuß an Dimethylsulfat durch Zulaufenlassen von 62 Teilen einer 6 %igen wäßrigen Ammoniaklösung vernichtet. Die 70 bis 80 °C warme Suspension wird abgesaugt und der Rückstand mit 190 Teilen 80 °C warmen Benzoesäuremethylesters gewaschen. Durch Waschen mit Methanol und Wasser wird der Rückstand von Lösungsmittelresten befreit und getrocknet. Ausbeute: 30 Teile Farbstoff.

Das gleiche Ergebnis wird erhalten, wenn der Rückstand durch Wasserdampfdestillation von Lösungsmittelresten befreit wird.

Beispiel 2

Zu 280 Teilen Benzoesäuremethylester und 42 Teilen Pottasche werden bei 80 °C 30 Teile 16,17-Dihydroxiviolanthrendion-5,10 und nach dem Aufheizen auf 120 °C 2 Teile Tributylamin und 3 Teile Dimethylanilin zugegeben. Das Gemisch rührt man 4 Stunden bei 120 °C und dann 2 Stunden bei 150 - 160 °C unter Abscheidung des Reaktionswassers. Anschließend werden bei 150 °C 31,5 Teile Dimethylsulfat in 3 Stunden zugetropft und das Reaktionsgemisch noch 3 Stunden bei 150 °C nachgerührt.

Die weitere Aufarbeitung erfolgt wie in Beispiel 1. Man erhält 30 Teile Farbstoff.

Beispiel 3

Man verfährt wie in Beispiel 2, tropft aber das Dimethylsulfat bei 140 °C zu und rührt 3 Stunden bei 160 °C nach. Ausbeute: 30 Teile Farbstoff.

Beispiel 4

Man verfährt wie in Beispiel 2, verwendet jedoch anstelle von Dimethylsulfat 46,5 Teile einer Mischung von o- und p-Toluolsulfonsäuremethylester und rührt 3 Stunden bei 170 bis 180 °C nach. Man erhält 30 Teile Farbstoff.

Beispiel 5

Man verfährt wie in Beispiel 4, gibt jedoch anstelle des Gemisches aus o- und p-Toluolsulfonsäuremethylester 43 Teile Benzolsulfonsäuremethylester zu. Man erhält das gleiche Ergebnis wie beim Beispiel 4.

Beispiel 6

Man verfährt wie in Beispiel 2, setzt jedoch anstelle von Dihydroxiviolanthrendion 30 Teile 6,15-Dihydroxiisoviolanthrendion-9,18 ein. Man erhält 34,5 Teile des Küpenfarbstoffs C.I. Vat Blue 26. C.I. No 60015.

Der Farbstoff kann gegebenenfalls durch Umlösen aus Schwefelsäure gereinigt werden (vgl. Friedländer 16, 1490).

Beispiel 7

Man verfährt wie in Beispiel 6, verwendet jedoch anstelle von Dimethylsulfat 46,5 Teile einer Mischung aus o- und p-Toluolsulfonsäuremethylesterund rührt 3 Stunden bei 170 bis 180 °C nach. Man erhält das gleiche Ergebnis wie beim Beispiel 6.

Beispiel 8

Man verfährt wie in Beispiel 2, verwendet jedoch anstelle von Dimethylsulfat 38,5 Teile Diethylsulfat. Man erhält 26 Teile des Küpenfarbstoffs. C.I. Vat Green 4, C.I. No. 59 835. Der Farbstoff kann gegebenenfalls durch Umlösen aus Schwefelsäure gereinigt werden.

Beispiel 9

Man verfährt wie in Beispiel 2, verzichtet aber auf den Zusatz von Dimethylanilin. Man erhält das gleiche Ergebnis wie in Beispiel 2.

**Patentansprüche**

**1.** Verfahren zur Herstellung von Bisalkoxi-(iso)-violanthrendionen der Formeln

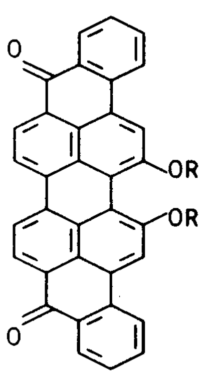

(I) und

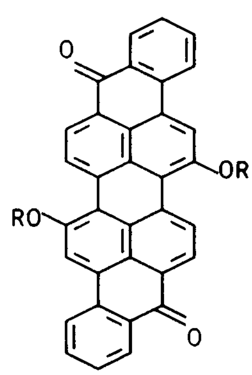

(II),

in denen R $C_1$- bis $C_4$-Alkyl bedeutet, durch Alkylierung der entsprechenden Bishydroxiverbindungen (R = H) in einer organischen Flüssigkeit als Reaktionsmedium in Gegenwart von Alkalimetallsalzen schwacher Säuren und tertiären aliphatischen und/oder tertiären aromatischen Aminen bei 100 bis 200 °C , dadurch gekennzeichnet, daß man als organische Flüssigkeit Benzoesäuremethylester verwendet.

**2.** Verfahren gemäß Anspruch 1, dadurch gekennzeichnet, daß man als Alkylierungsmittel Dialkylsulfat, o- und/oder p-Toluolsulfonsäurealkylester, Benzolsulfonsäurealkylester, Methanphosphonsäuredialkylester oder Gemische dieser Mittel verwendet.

**3.** Verfahren gemäß Anspruch 1 oder 2, dadurch gekennzeichnet, daß man als Alkalimetallsalze schwacher Säuren Natriumcarbonat, Kaliumcarbonat oder Gemische davon verwendet.

**4.** Verfahren gemäß Anspruch 1, 2 oder 3, dadurch gekennzeichnet, daß 16,17-Dihydroxiviolanthrendion-5,10 methyliert wird.

**5.** Verfahren gemäß Anspruch 1, 2 oder 3, dadurch gekennzeichnet, daß 6,15-Dihydroxiisoviolanthrendion-9,18 methyliert wird.

**6.** Verfahren gemäß Anspruch 1, 2 oder 3, dadurch gekennzeichnet, daß 16,17-Dihydroxiviolanthrendion-5,10 ethyliert wird.

## Claims

**1.** A process for the preparation of a bisalkoxy(iso)-violanthrenedione of the formula

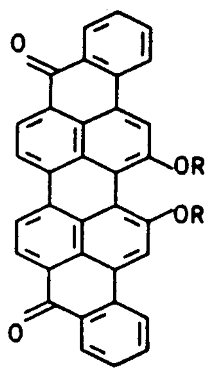

(I)

or

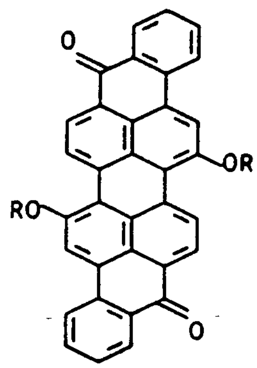

(II),

where R is $C_1$ to $C_4$-alkyl, by alkylating the corresponding bishydroxyl compound (R = H) in an organic liquid as the reaction medium in the presence of an alkali metal salt of a weak acid and a tertiary aliphatic amine and/or of a tertiary aromatic amine, at from 100 to 200 °C, which comprises using methyl benzoate as the organic liquid.

**2.** A process as claimed in claim 1, wherein the alkylating agent used is dialkyl sulfate, alkyl o-toluenesulfonate and/or alkyl p-toluenesulfonate, alkyl bensenesulfonate, dialkyl methanephosphonate or a mixture of these agents.

**3.** A process as claimed in claim 1 or 2, wherein the alkali metal salt of a weak acid is sodium carbonate, potassium carbonate or a mixture thereof.

**4.** A process as claimed in claim 1 or 2 or 3, wherein 16,17-dihydroxyviolanthrene-5,10-dione is methylated.

**5.** A process as claimed in claim 1 or 2 or 3, wherein 6,15-dihydroxyisoviolanthrene-9,18-dione is methylated.

**6.** A process as claimed in claim 1 or 2 or 3, wherein 16,17-dihydroxyviolanthrene-5,10-dione is ethylated.

## Revendications

**1.** Procédé de préparation de bis-alcoxy-(iso)violanthrènediones de formules

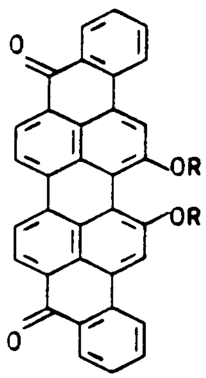

(I) et

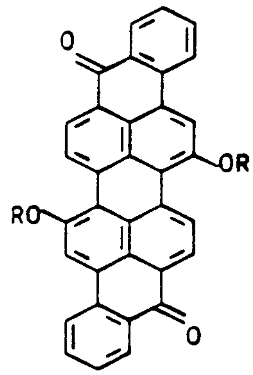

(II),

dans lesquelles R représente un reste alkyle en $C_1$ à $C_4$, par alkylation des composés bis-hydroxylés correspondants (R = H) dans un liquide organique servant de milieu réactionnel, en présence de sels de métaux alcalins d'acides faibles et d'amines aliphatiques tertiaires et/ou aromatiques tertiaires, à une température de 100 à 200 ° C, caractérisé en ce qu'on utilise, comme liquide organique, du benzoate de méthyle.

**2.** Procédé selon la revendication 1, caractérisé en ce qu'on utilise, comme agent d'alkylation, un sulfate de dialkyle, un ester alkylique d'acide o- et/ou p-toluènesulfonique, un ester alkylique d'acide benzènesulfonique, un ester dialkylique d'acide méthanephosphonique ou des mélanges de ces agents.

**3.** Procédé selon la revendication 1 ou 2, caractérisé en ce qu'on utilise, comme sel de métal alcalin d'acides faibles, du carbonate de sodium, du carbonate de potassium ou des mélanges de ces sels.

**4.** Procédé selon l'une quelconque des revendications 1 à 3, caractérisé en ce qu'on méthyle de la 16,17-dihydroxyviolanthrènedione-5,10.

**5.** Procédé selon l'une quelconque des revendications 1 à 3, caractérisé en ce qu'on méthyle de la 6 15-dihydroxyisoviolanthrènedione-9,18.

**6.** Procédé selon l'une quelconque des revendications 1 à 3, caractérisé en ce qu'on éthyle de la 16,17-dihydroxyviolanthrènedione-5,10.